# EUROPÄISCHE PATENTANMELDUNG

(11) **EP 1 055 851 A2**
(43) Veröffentlichungstag der Anmeldung: **29.11.2000**
(21) Anmeldenummer: 00250160.9
(22) Anmeldetag: 23.05.2000
(51) Int. Cl.: F16K 31/04

(54) **Drehkolbenventil mit elektromotorischem Stellantrieb**

(30) Priorität: 25.05.1999 DE 19923746
(71) Anmelder: WOCO Franz-Josef Wolf & Co., D-63628 Bad Soden-Salmünster (DE)
(72) Erfinder: Wolf, Franz Josef, 63628 Bad Soden-Salmünster (DE); Modenbach, Thomas, 60433 Frankfurt (DE)
(74) Vertreter: Jaeger, Klaus, Dipl.-Chem. Dr.

(57) **Zusammenfassung**

Bei einem Drehkolbenventil mit elektromotorischem Stellantrieb und einem mit dem Ventilgehäuse integrierten Antriebsgehäuse (2) ist für die Stellsteuerung ein Schleifkontakt vorgesehen mit einem relativ zum Drehkolben ortfest mit diesem verbundenen elektrischen Schleifkontaktgeber (7) mit mehreren Kontaktfederzungen (8,9,10), der mit Schleifkontaktbahnen zusammenwirkt, die ihrerseits relativ zum Antriebsgehäuse (2) des Ventils ortsfest so angeordnet sind, dass der Schleifkontakt ein die Winkelstellung des Drehkolbens abbildendes Kontaktmuster oder Kontaktpotential liefert, das einem an den Schleifkontakt angeschlossenen Treibertransistor für den Elektromotor (6) als Steuersignal dient.

## Beschreibung

Die Erfindung betrifft ein Drehkolbenventil der im Oberbegriff des Patentanspruchs 1 genannten Art.

Speziell betrifft die Erfindung ein Drehkolben-Absperrventil, das insbesondere für einen Einsatz im Kraftfahrzeugbau konzipiert und geeignet ist.

So sind insbesondere für eine Verwendung im Kühlwasserkreislauf eines Kraftfahrzeugs aus dem landläufigen Stand der Technik Ventile in großer Anzahl bekannt, die mechanisch, pneumatisch oder auch elektromotorisch stellbar sind. Bei den elektromotorisch angetriebenen und gestellten Drehkolbenventilen erfolgt die Steuerung der Drehung entweder unter Verwendung passiver elektrischer Bauteile oder unter Verwendung von Schrittmotoren. Als passive elektrische Bauelemente finden vor allem Potentiometer Verwendung. Nach beiden Verfahren werden Motorstellungen ermittelt und angesteuert. Diese Motorstellungen dienen unter Berücksichtigung der entsprechenden mechanischen oder elektrischen Übertragungsfunktionen als Abbild der tatsächlichen Stellung des Ventildrehkolbens.

Diese bekannten Lösungen sind kostenaufwendig, bei der Verwendung abtastender passiver elektrischer Bauelemente durch die Kosten dieser Bauelemente und deren Installation, bei der Verwendung von Schrittmotoren durch die höheren Kosten des Schrittmotors selbst sowie durch seine Installation und Justierung.

Überdies sind solche Elektromotoren zumindest im Bereich des Kraftfahrzeugbaus als Wendemotoren ausgebildet, die die Kosten für solche elektromotorisch gesteuerten Drehkolbenventile weiter anheben.

Nachteilig bei den bekannten Konzepten sind jedoch nicht nur die höheren Kosten der Ventile, der von Ihnen benötigten Anlagen und deren Installation, sondern auch ihre Anfälligkeit. Dadurch, daß nicht die Winkelstellung des Ventildrehkolbens im Ventilgehäuse oder relativ zum Ventilsitz abgetastet wird, sondern die jeweilige Motorstellung als Abbildung der Winkelstellung des Ventildrehkolbens aufgenommen und verarbeitet wird, kann nicht mit Sicherheit, zumindest nicht ohne zusätzlichen Aufwand überwacht werden, ob die Übertragungsstrecke von der Motorwelle auf die Ventilwelle letztendlich das Drehkolbenventil tatsächlich noch korrekt stellt, oder ob durch Ausfall beispielsweise einer Welle oder eines Zahnrades, das Ventil in Wirklichkeit beispielsweise ständig geschlossen bleibt, obwohl der elektrische Stellmotor das Ventil als "offen" signalisiert.

Der Erfindung liegt ausgehend von diesem Stand der Technik das technische Problem zugrunde, ein elektromotorisch gestelltes Drehkolbenventil zu schaffen, das eine hohe Betriebszuverlässigkeit aufweist, einen minimalen Installations- und Montageaufwand erfordert und sowohl dadurch als auch durch das Einsparen von Bauteilen kostensparend eingesetzt werden kann.

Das Drehkolbenventil der Erfindung, das dieses technische Problem löst, weist die im Patentanspruch 1 genannten Merkmale auf.

Der Vorteil des Drehkolbenventils der Erfindung beruht also darauf, daß die Winkelstellung des Ventildrehkolbens im Ventilgehäuse mit einfachen und billigen Mitteln, nämlich einem Schleifkontakt, unmittelbar am Drehkolben selbst abgetastet wird, und zwar während des Stellvorganges, und aufgrund dieser Abtastung ein Signal erhalten wird, das seinerseits unmittelbar den Treiber, in der Regel einen Leistungstransistor, für die Motorbeaufschlagung ansteuert. Dieses Steuerungssignal kann im einfachsten Fall ein Potential sein, das mit einer Polarität von "-" oder "+" ein 1 bit-Signal für die Steuerung des Leistungstransistors des Elektromotors sein kann, oder als Ausgangsgröße ein Kontaktmuster liefert, das dann beispielsweise in der zentralen elektronischen Motorsteuerung ebenfalls digital ausgewertet und weiterverarbeitet werden kann.

Der die Winkelstellung des Drehkolbens abtastende Schleifkontakt ist vorzugsweise in einem mit dem Drehkolbenventil integrierten Antriebsgehäuse dergestalt untergebracht, daß der Schleifkontaktgeber, zumeist ein mit mehreren Zungen ausgebildeter Federkontaktschleifer, fest und exzentrisch auf dem Drehkolbenkopf angeordnet und fixiert ist, während die Schleifkontaktbahnen auf einer Isolatorplatine aufgebracht sind, die ortsfest zum Antriebsgehäuse des Drehkolbenventils über dem Kopf des Drehkolbens, mit den Leiterbahnen zum Drehkolben, befestigt ist. Diese Schleifkontaktbahnen sind dabei vorzugsweise eine Folge konzentrischer segmentierter oder unsegmentierter Leiterbahnkreise, durch deren gemeinsamen Mittelpunkt die Drehachse des Drehkolbens verläuft.

Insbesondere wird eine sehr kompakte und als Baugruppe leicht montierbare Drehkolbenventileinheit erhalten, wenn der Elektrostellmotor unmittelbar mit im Antriebsgehäuse untergebracht ist. Die Abtriebswelle dieses Motors ist dabei vorzugsweise als Gewindeschnecke ausgebildet, die mit einem Stirnzahnrad gekämmt, das so auf dem Drehkolbenkopf fixiert ist, daß die Drehachse des Zahnrades koaxial zur Drehachse des Drehkolbens ausgerichtet ist. Ventilkörper und Stellmotor sind dabei nach einer Ausgestaltung der Erfindung vorzugsweise so ausgebildet, daß der Elektromotor den Drehkolben stets in einer Drehrichtung fortstellt, also die Bewegung nicht umkehrt.

Weitere Ausgestaltungen der Erfindung sind in Einzelheiten den Unteransprüchen sowie der folgenden Beschreibung eines Ausführungsbeispiels des Drehkolbenventils zu entnehmen.

Die Erfindung ist daher im folgenden anhand eines Ausführungsbeispiels in Verbindung mit den Zeichnungen näher erläutert.

Es zeigen:
- Fig. 1: in perspektivischer Draufsicht bei abgenommener Schleifkontaktbahnplatine und geöffnetem Antriebsgehäusedeckel ein Ausführungsbeispiel des Drehkolbenventils der Erfindung; und
- Fig. 2: ein Beispiel für eine Anordnung und Konfiguration von Schleifkontaktbahnen auf einer Platine wie sie mit einem drei Kontaktfederzungen aufweisenden Schleifkontaktgeber der in Fig. 1 gezeigten Ausgestaltung abgetastet werden können.

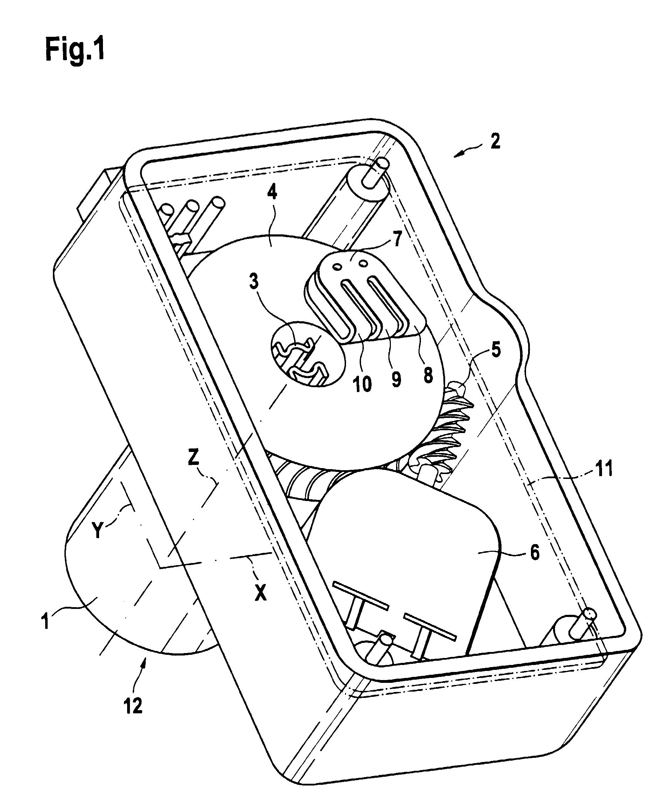

In der Fig. 1 ist in perspektivischer Darstellung der Drehkolben 1 eines hier nicht näher dargestellten Drehkolbenventils mit einem integrierten geöffneten Antriebsgehäuse 2 mit Teilen des Antriebs für den Drehkolben 1 gezeigt. Der Kopf 3 des Drehkolbens 1 trägt ein Zahnrad 4, das als Stirnrad ausgebildet ist. Mit dem Stirnrad kämmt eine Schneckenwelle 5, die als Ausgang eines als Stellmotor dienenden Elektromotors 6 dient. Der Elektromotor 6 ist kein Wendemotor und dreht den Drehkolben 1 über das Zahnrad 4 für jeden Stellvorgang stets in ein und derselben Drehrichtung.

Der Stellmotor 6 wird über einen Leistungstransistorschalter beaufschlagt, der in den Figuren nicht separat dargestellt ist.

Ortsfest ist auf der Hauptoberfläche des Zahnrades 4 ein einstückiger Schleifkontaktgeber 7 mit drei Zungen 8, 9, 10 fixiert. Die Kontakte dieser Kontaktfederzungen schleifen bei Drehung des Zahnrades 4 und damit des mit diesem drehfest und koaxial verbundenen Ventildrehkolbens 1 auf Schleifkontaktbahnen A bis D, die auf der Unterseite einer Platine 11, die in der Fig. 1 zwar nicht als solche, wohl aber durch ihre Lagekontur dargestellt ist.

Um die Erfindung möglichst verständlich darzustellen, ist das hier beschriebene Ausführungsbeispiel der Erfindung ein einfaches Absperrventil, dessen Drehkolben 1 lediglich eine durchgehende Öffnung 12 aufweist, die eine in der Fig. 1 gezeigte Sperrstellung und eine zu dieser Stellung um 90° um die Drehachse, d.h. die z-Achse, verdrehte Stellung als Durchflußstellung einnehmen kann.

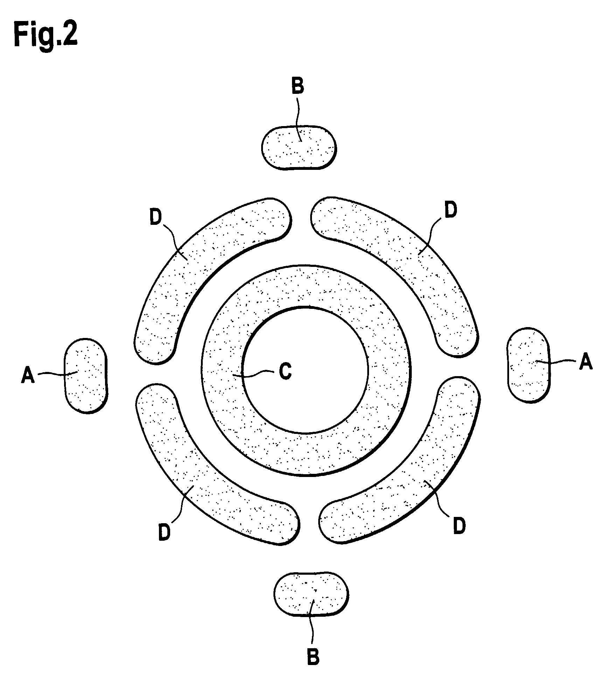

Die für diese einfache Stellaufgabe erforderlichen Leiterbahnen, die Schleifkontaktbahnen A bis D, die auf der Unterseite der Platine 11 angeordnet sind, sind in Fig. 2 gezeigt.

Diese Schleifkontaktbahnen sind als drei koplanare und zueinander konzentrische Kreise, genauer gesagt Kreisringflächen, konfiguriert, deren gemeinsamer Mittelpunkt im zusammengebauten Drehkolbenventil auf der Drehachse des Drehkolbens 1 liegt.

Die innerste Schleifkontaktbahn C ist eine nicht segmentierte, elektrisch in sich geschlossene Leiterbahn.

Die mittlere Schleifkontaktbahn D ist eine durch vier Isolatorabschnitte in vier symmetrische Leiterbahnsegmente aufgeteilte "segmentierte" Schleifkontaktbahn.

Die äussere Schleifkontaktbahn A-B-A-B ist eine durch vier lange kreisbogenförmige Isolatorabschnitte in vier kurze symmetrische Leiterbahnsegmente aufgeteilte "segmentierte" Schleifkontaktbahn. Die einander paarweise diametral gegenüberliegenden Leitersegmente A, B sind jeweils auf Lücke zu den Leiterbahnsegmenten der Schleifkontaktbahn D angeordnet.

Im zusammengebauten Drehkolbenventil schleift die Kontaktzunge 10 (Fig. 1) auf der Schleifkontaktbahn C, die Kontaktzunge 9 auf der Schleifkontaktbahn D und die Kontaktzunge 8 auf der äusseren Schleifkontaktbahn A-B-A-B.

Die Kontaktzungen 8, 9, 10 sind durch eine einstückige metallische Ausgestaltung des Schleifkontaktgebers 7 elektrisch leitend miteinander verbunden, liegen also stets auf gleichem Potential.

Das jeweils aktuelle Potential des Schleifkontaktgebers 7 wird kontinuierlich und ohne Unterbrechung auf die als Abnehmer dienende Schleifkontaktbahn C übertragen. Diese ist ihrerseits elektrisch leitend mit dem Steuereingang eines Leistungstransistors verbunden, der als Treiber für die Leistungsbeaufschlagung Elektro-Stellmotors 6 des Ventils dient.

An der Schleifkontaktbahn D liegt von aussen ständig ein positives Potential an, wobei in dem hier beschriebenen Ausführungsbeispiel der Erfindung angenommen ist, dass der Leistungstransistor beim Anliegen eines positiven Potentials an seinem Steuereingang öffnet, den Elektromotor also bestromt, sich dieser also letztendlich dreht und den Ventildrehkolben drehend verstellt.

An den Leiterbahnsegmenten A-A und B-B der äusseren Schleifkontaktbahn A-B-A-B liegt jeweils paarweise gleiches, aber von Paar zu Paar jeweils unterschiedliches Potential an. Wenn also beispielsweise die beiden Leiterbahnsegmente A-A auf positivem Potential liegen, liegen die beiden Leiterbahnsegmente B-B auf negativem Potential, d. h. auf Masse. Welches der beiden Leiterbahnsegmentpaare im einzelnen zu welchem Zeitpunk jeweils auf welchem Potential liegen, wird je nach betriebsbedingtem Stellbedarf von aussen, beispielsweise von einer elektronischen Motorsteuerung, veranlasst.

Zur Funktionserläuterung sei angenommen, das Leiterbahnsegmentpaar A-A läge auf negativem Potential und die Kontaktzunge 8 stünde in elektrischer Verbindung auf einem der beiden Leiterbahnsegmenten A. Da die drei Kontaktzungen 8, 9, 10 in der aus Fig. 1 entnehmbaren Weise auf einer gemeinsamen Geraden angeordnet sind, steht also die Kontaktzunge 9 auf dem Isolatorabschnitt zwischen den beiden benachbarten Leiterbahnsegmenten D. Der Schleifkontaktgeber 7 liegt also insgesamt auf einem negativen Potential, das über die Schleifkontaktbahn C dem Steuereingang des Leistungstransistors aufgeprägt wird. Der Leistungstransistor sperrt, und der Ventilstellmotor steht.

Wenn dann das an dem Leiterbahnsegment A anliegende Potential auf ein positives Potential umgeschaltet wird, wird gleichzeitig das an dem Leiterbahnsegmentpaar B-B zuvor positive Potential auf ein negatives Potential umgeschaltet.

Das nach dem Potentialumschalten an A anliegende positive Potential gelangt auf dem zuvor beschriebenen Weg auf den Steuereingang des Leistungstransistors, der seinerseits öffnet, so dass sich der Elektromotor 6 zu drehen beginnt und der Drehkolben damit ebenfalls verstellt wird. Dabei bleibt der Schleifkontaktgeber 7 jedoch auch dann noch auf positivem Potential, wenn die Kontaktzunge 8 bereits von A auf den angrenzenden Isolatorbereich gewandert ist, da die Potentialgabe dann wieder von der Schleifkontaktbahn D aus erfolgt.

In dieser Konstellation läuft der Motor dann so lange, bis die Kontaktzunge 8 auf das dann mit negativem Potential beaufschlagte Leiterbahnsegment B aufläuft, was zum Stillstand des Elektromotors in der zweiten Schaltstellung, beispielsweise also in Druchflussstellung des Ventils, führt.

## Patentansprüche

1. Drehkolbenventil mit elektromotorischem Stellantrieb, insbesondere Absperrventil für den Kühlwasserkreislauf in einem Kraftfahrzeug, bei dem ein in einem Antriebsgehäuse des Ventils angeordneter Elektromotor den Drehkolben des Ventils rotatorisch stellt,
**gekennzeichnet** durch
einen Schleifkontakt mit relativ zu dem Drehkolben (1) ortfest mit diesem verbundenen elektrischen Schleifkontaktgebern (7), die mit Schleifkontaktbahnen (A....D) zusammenwirken, die ihrerseits relativ zum Antriebsgehäuse (2) des Ventils ortsfest so angeordnet sind, dass der Schleifkontakt ein die Winkelstellung des Drehkolbens abbildendes Kontaktmuster oder Kontaktpotential erzeugt, das einem an den Schleifkontakt angeschlossenen Treibertransistor für den Elektromotor als Steuersignal dient.

2. Drehkolbenventil nach Anspruch 1,
**gekennzeichnet** durch
eine Ausbildung der Schleifkontaktbahnen (A.....D) auf einer Platine (11), die in einer Ebene senkrecht zur Drehachse des Drehkolbens (1), also in der Radialebene des Drehkolbens, ausgerichtet ist.

3. Drehkolbenventil nach einem der Ansprüche 1 oder 2,
**gekennzeichnet** durch
elektrisch gegeneinander isolierete Schleifkontaktbahnen (C, D, A-B-A-B), von denen eine (C) in sich geschlossen verläuft und als gebende oder resultierende Referenz ohne Unterbrechung in ständigem Kontakt zu einem zugeordneten Schleifkontaktgeber (10) steht, während die anderen Schleifkontaktbahnen zur Abbildung der Winkelstellung des Drehkolbens (1) segmentiert ausgebildet sind.

4. Drehkolbenventil nach einem der Ansprüche 1 bis 3,
**gekennzeichnet** durch
eine Konfiguration der Schleifkontaktbahnen in Form einer koplanaren Folge zueinander konzentrischer Kreise, deren Mittelpunk auf der Drehachse des Drehkolbens liegt.

5. Drehkolbenventil nach den Ansprüchen 3 und 4,
**gekennzeichnet** durch
die Ausbildung der radial innersten Schleifkontaktbahn (C) als ohne elektrische Unterbrechung in sich geschlossen umlaufende Schleifkontaktbahn, die nach radial aussen hin von elektisch segmentierten Schleifkontaktbahnen umgeben ist.

6. Drehkolbenventil nach Anspruch 5,
**gekennzeichnet** durch
eine in Richtung nach radial aussen zunehmende Verlängeung der elektrisch isolierenden Schleifkontaktbahnsegmente und eine in gleichem Sinne zunehmende Verkürzung der elektrisch leitenden Segmente der Schleifkontaktbahnen.

7. Drehkolbenventil nach einem der Ansprüche 1 bis 6,
**gekennzeichnet** durch
eine Auf-Lücke-Ausrichtung elektrisch isolierender und der elektrisch leitender Schleifkontaktbahnsegmente benachbarter Schleifkontaktbahnen (D, A-B-A-B).

8. Drehkolbenventil nach einem der Ansprüche 1 bis 7,
**gekennzeichnet** durch
ein mit dem Drehkolben (1) verbundenes Zahnrad (4), dessen Drehachse koaxial zur Drehachse des Drehkolbens verläuft, das den Schleifkontaktgeber (7) trägt und mit einem Elektromotorabtrieb (5) kämmt.

9. Drehkolbenventil nach Anspruch 8,
**gekennzeichnet** durch
einen Elektromotor (6), der den Drehkolben (1) ohne Richtngsumkehr stellt, und zwar über eine Ausgangsschneckenwelle (5), die mit der Stirnseite des Drehkolben-Zahnrades (4) kämmt.
